# EUROPEAN PATENT APPLICATION

(11) **EP 1 566 780 A1**
(43) Date of publication of application: **24.08.2005**
(21) Application number: 04445013.8
(22) Date of filing: 19.02.2004
(51) Int. Cl.: G07F 19/00

(54) **Mobile payment solution**

(71) Applicant: Goyada Partner AB, 11120 Stockholm (SE)
(72) Inventor: Fungdal, Hans, 13331 Saltsjöbaden (SE)
(74) Representative: Hopfgarten, Nils

(57) **Abstract**

The present invention relates to a system, method and computer program products enabling the safe mobile payment with credit cards. A Mobile Payment Collection Solution (D) that perform credit card transactions from any credit card holder (A) to registered users (B) of the Mobile Payment Collection Solution where the registered users (B) of the Mobile Payment Collection Solution only need a mobile phone (C) to execute the transaction.

## Description

### Field of invention

The present invention relates to a method, system and computer program products intended to enable a mobile solution to a safe receipt of payment through credit cards.

### Description of the background art

Credit card based mobile payment solutions require that the customers register with the payment solution prior to the transaction. This registration is often necessary to avoid fraudulent use. The registration process does however limit the number of customers, something that in turn limit the number of shops interested in using the payment solution. This is the big draw back of existing mobile payment solutions.

An example of this is when a pizza delivery boy shall charge the customer. Using existing mobile payment solutions only customers previously registered with the mobile payment solution can be treated.

### Summary of the present invention

A Mobile Payment Collection Solution that perform credit card transactions from any credit card holder to registered users of the Mobile Payment Collection Solution where the registered users of the Mobile Payment Collection Solution only need a mobile phone to execute the transaction.

In the pizza boy example above any customer can now pay since the pizza boy uses his own mobile phone, registered by his employer in the Mobile Payment Collection Solution, instead of the customer's.

### Brief description of the drawings.

A system, method, computer program products and a computer readable medium according to the present invention will now be described in detail with reference to the accompanying drawings, in which:
- Figure 1: is a schematic and simplified illustration of an inventive system and method,

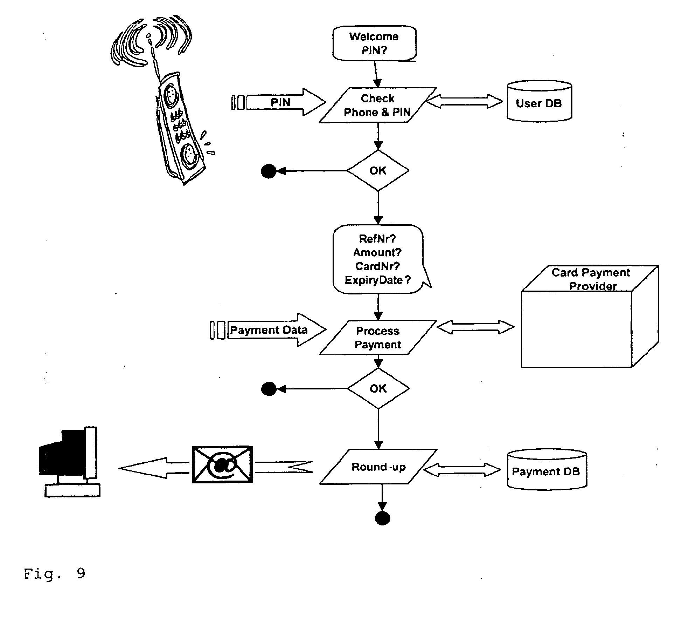

- Figures 2 to 8: are schematic and simplified illustrations of the information content and format of different messages used by the invention, and
- Figure 9: is a flow chart intended to simplify the understanding of the present invention.

### Description of embodiments as presently preferred

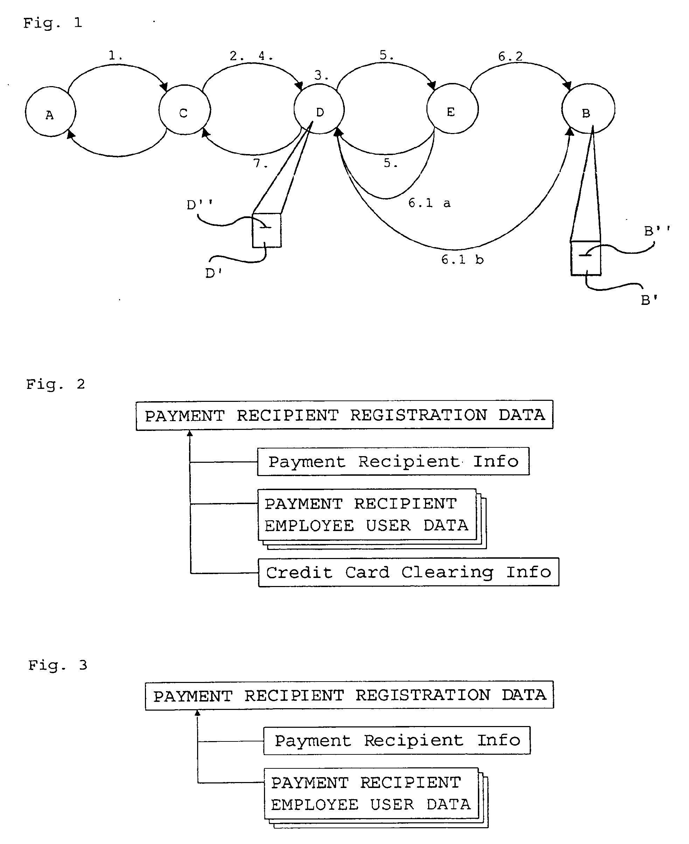

With reference to figure 1, an inventive system and method is described where the different agents involved are as follows:
A. Payee - the customer whose card shall be debited,
B. A second computer unit, belonging to a Payment Recipient - the company to whom the Payee's money shall be transferred,
C. A first communication unit available to a Payment Recipient Employee, that might be a salesperson that initiates the mobile transaction using for instance his mobile phone,
D. A first communication unit belonging to an independent party providing a mobile payment collection solution - might be connected to a multitude of independent Payment Recipients, each with its Payment Recipient Employees and Payees and a multitude of independent credit card clearing services,
E. A third communication unit, belonging to a credit card clearing service supplied by one or several banks.

A purchase process according to the inventive method and system will now be described with reference to figure 1:
1. Payee gives his credit card information to Payment Recipient Employee
2. Payment Recipient Employee connect to Mobile Payment Collection Solution
3. Payment Recipient Employee is authenticated by the Mobile Payment Collection Solution using the phone number from which the call is received and PIN. This information is matched against the Payment Recipient Employee User Data stored within the Mobile Payment Collection Solution.
4. Payment Recipient Employee transfers transaction information to Mobile Payment Collection Solution.
5. The Mobile Payment Collection Solution verifies and performs the payment using the Banks. Here by the Payee's money end up
   - either in 6.1a the Payment Recipient's account within the Mobile Payment Collection Solution for later periodical transfer to Payment Recipients bank accounts 6.1b.
   - or 6.2 in the Payment Recipient's bank account.
7. The Payment Result is communicated back to the Payment Recipient Employee

The Payment Recipient registers with the Mobile Payment Collection Solution according to the inventive system and method prior to the first purchase. The registration might be made in one of two ways:

If the Payment Recipient is registered with information as in figure 2 the Mobile Payment Collection Solution might use the Payment Recipient's Credit Card clearing bank agreements during the transaction and the customer's payment will be transferred directly to the Payment Recipient's bank account, as in 6.2 of figure 1.

To reduce the complexity of the set up procedure the Payment Recipient might also choose to use internal accounts within the Mobile Payment Collection Solution. Information from figure 3 will then be used for registration.

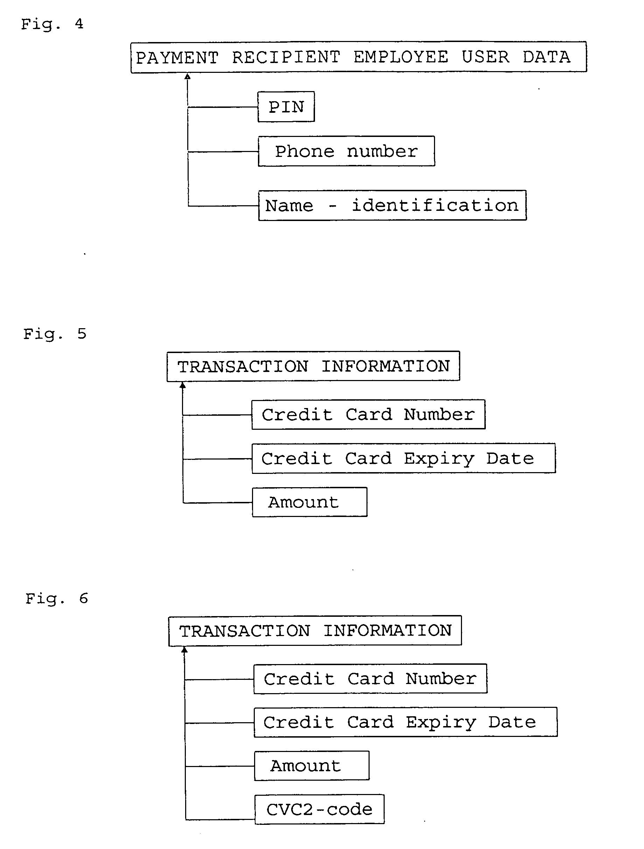

The information needed for each Payment Recipient Employee entry is represented by figure 4.

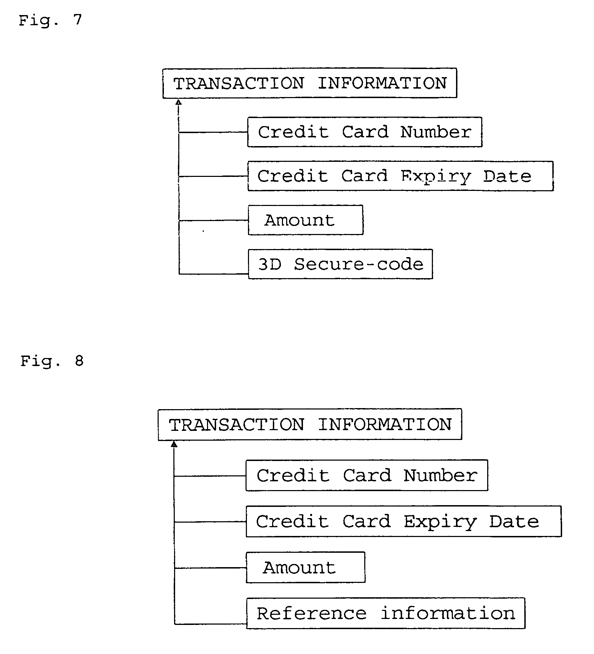

The transaction information transferred in step 4 of figure 1 includes the information in figure 5. If the information in figure 6 is supplied the risk of frauds might be further reduced since the CVC2-code is the three digits present on the back of the Credit Card and thereby increase the need to access the actual Credit Card. If the information in figure 6 is supplied the Mobile Payment Collection Solution might use the now evolving 3D-secure system developed by Visa and MasterCard. By supplying the information in figure 7 the Payment Recipient Employee might connect additional Reference Information to the transaction.

It should be understood that the term Credit Card might be replaced by any card that the Mobile Payment Collection Solution can clear such as Debit Cards and several customer cards, e.g. EuroShell and Diners.

Risk of Credit Card fraud is low. If the Payee is required to present the Credit Card and might be asked to sign the transaction.

The Payment Recipient Employee communicates with the Mobile Payment Collection Solution using either
- a telephone call to a Interactive Voice Response equipment, or
- USSD, a signaling protocol within the GSM standards.

The Payment Recipient Employee identification using A-number, the dialing party's telephone number as sent throught the telecomunications networks, as described above might be replaced by a "Enter your registered phone number" question if the Payment Recipient Employee is calling from a telephone other then the pre-registered. Hereby the Mobile Payment Collection Solution might be used from fixed telephones.

The pre-registration of the Payment Recipient and its Payment Recipient Employees instead of the Payee differs the Mobile Payment Collection Solution from other Mobile Payment Solutions.

The Mobile Payment Collection Solution provides separate password protected HTTP, Internet webb, interfaces to the Payment Recipients where transaction statistics can be accessed and Payment Recipient Employee User Data can be registered and modified.

The Mobile Payment Collection Solution provides the Payment Recipients with the possibility to fetch or receive periodical transaction statistics in text files sent over File Transfer Protocol.

The present invention also relates to a first computer program product D' comprising first computer program code D", which, when executed by a computer, will cause said computer to act as a first computer D in an inventive method or system.

The present invention also relates to a second computer program product B' comprising second computer program code B", which, when executed by a computer, will cause said computer to act as a second computer B in an inventive method or system.

The present invention also relates to a computer readable medium whereon inventive computer program code is stored.

### Example of voice prompts in Interactive Voice Response equipment

"Welcome to XX's payment collection service"
"Enter your PIN-code"
[Request with A-number and PIN to databases. Response OK or NOK. Error handling if NOk]
[if OK]
"Enter the Payee's credit card number"
[16 digits, validation of format and error handling]
"Enter the expiry date."
[4 digits, validation of format and error handling]
"Enter the amount to be withdrawn from Payee"
[up to a fixed number of digits, validation of format and error handling]
"You have ordered XXX to be withdrawn from creditcard no XXX with expiry date XXX. If correct press # to execute payment. Otherwise press * to abort.
[Transaction is processed]
"We are now debiting the Payee's Credit Card. Don't hang up until confirmation has been presented."
[Once transaction is competed one of the promts below.]
1. [Transaction successfully completed]
   "The transaction has now been successfully executed. Please hang up."
2. [Transaction not successfully completed due to...]
   "The transaction could not be completed due to ..."
2. [Transaction not successfully completed due to...]
   "The transaction could not be completed due to ..."
3. [Transaction not successfully completed due to...]
   "The transaction could not be completed due to ..."
4. [Transaction not successfully completed due to...]
   "The transaction could not be completed due to ..."

It will be understood that the invention is not restricted to the aforedescribed and illustrated exemplifying embodiments thereof and that modifications can be made within the scope of the inventive concept as illustrated in the accompanying Claims.

## Claims

1. A system for the receipt of mobile payment through credit cards, **characterised in, that** said system comprises a first computer unit (D), belonging to an independent party providing a mobile payment collection solution, a second computer unit (B), belonging to a payment recipient, a first communication unit (C), belonging to a payment recipient employee, and a third computer unit (E), belonging to a credit card clearing service, said computer units comprising required memory units and communication units to communicate with each other and store required information or data, that said system is adapted to provide a purchase process where:
- said first communication unit (C) is adapted to allow said payment recipient employee connect to said first computer unit (D), after receiving credit card information from a payee (A),
- said first computer unit (D) is adapted to authenticate said first communication unit (C) using the phone number from which the call from said first communication uint is received and PIN, which information is matched against Payment Recipient Employee User Data stored within said first computer unit (D),
- said payment recipient employee, through said first communication unit (C), transfers transaction information to said first computer unit,
- said first computer unit is adapted to verify and perform the payment through communication with said third computer unit (E),
- said third computer unit is adapted to send the payee's money
○ either to a Payment Recipient's account (6.1 a) for later periodical transfer to a Payment Recipients bank accounts (6.1 b)
○ or directly to a Payment Recipient's bank account (6.2), and
- said first computer unit is adapted to communicate the payment result to said first communication unit (C) and thereby said payment recipient employee.

2. A method for the receipt of mobile payment through credit cards, **characterised in, that** a first computer unit (D), belonging to an independent party providing a mobile payment collection solution, a second computer unit (B), belonging to a payment recipient, a first communication unit (C), belonging to a payment recipient employee, and a third computer unit (E), belonging to a credit card clearing service, said computer units comprising required memory units and communication units to communicate with each other and store required information or data, provides a purchase process where:
- a payee gives his credit card information to said payment recipient employee
- said payment recipient employee connect to said first computer unit (D), by means of said first communication unit (C)
- said first computer unit (D) authenticates said first communication unit (C) using the phone number from which the call from said first communication uint is received and PIN, which information is matched against Payment Recipient Employee User Data stored within said first computer unit (D),
- said payment recipient employee, through said first communication unit (C), transfers transaction information to said first computer unit,
- said first computer unit is verifies and performs the payment through communication with said third computer unit (E),
- said third computer unit sends the payee's money
○ either to a Payment Recipient's account (6.1 a) for later periodical transfer to a Payment Recipients bank accounts (6.1 b)
○ or directly to a Payment Recipient's bank account (6.2), and
- said first computer unit communicates the payment result to said first communication unit (C) and thereby said payment recipient employee.

3. A first computer program product, **characterised in, that** said first computer program product comprises first computer program code, which, when executed by a computer, will cause said computer to act as a first computer according to claims 1 and 2.

4. A second computer program product, **characterised in, that** said second computer program product comprises second computer program code, which, when executed by a computer, will cause said computer to act as a second computer according to claims 1 and 2.

5. A computer readable medium, **characterised in, that** computer program code according to claim 3 or 4 is stored on said computer readable medium.
